# FASCICULE DE BREVET EUROPEEN

(11) **EP 1 241 121 B1**
(45) Date de publication et mention de la délivrance du brevet: **26.11.2003**
(21) Numéro de dépôt: 02002098.8
(22) Date de dépôt: 13.02.2002
(51) Int. Cl.: B65H 23/025, B65H 39/16, B32B 31/00

(54) **Dispositif de préparation d'un film plastique**
Vorrichtung zur Vorbereitung eines Kunststoffilms
Device for preparing a plastic film

(30) Priorité: 16.02.2001 FR 0102118
(43) Date de publication de la demande: 18.09.2002
(73) Titulaire: T & I Technische und Industrielle Beratungen GmbH, 9500 Villach (AT)
(72) Inventeur: Gazza, Gianluca, Cabinet Hautier, 24, rue Masséna, 06000 Nice (FR)
(74) Mandataire: Hautier, Jean-Louis

(56) Documents cités:
- EP-A- 0 827 827
- EP-A- 0 899 089
- FR-A- 2 223 992

## Description

La présente invention concerne un dispositif de préparation d'un film plastique en vue de sa stratification sur une feuille métallique.

De façon connue, on revêt une feuille métallique d'une couverture plastique par exemple sous forme d'une résine polymère afin de la protéger, d'améliorer son état de surface et son aspect esthétique ou pour d'autres raisons.

D'une façon générale, cette phase de revêtement s'effectue de façon continue par déroulement de la feuille métallique et d'une bande de film plastique jusqu'une zone commune où s'effectue l'application du film plastique sur la feuille métallique. Cette application s'effectue généralement par un cylindre de stratification.

Dans ce domaine, on connaît du document WO-A-97 43118 un dispositif de fabrication d'une feuille métallique recouverte d'une résine qui permet de réduire la présence de bulles entre le film de résine stratifié et la feuille métallique, même lorsque l'on stratifie à grande vitesse la résine sur une feuille métallique en bande. Selon ce document, la fabrication com p rend les étapes consistant à chauffer une feuille métallique en bande avançant en continu, à fournir un film de résine thermoplastique chauffé à une température inférieure à la température d'amollissement du film, mais au moins à une température de surface d'un rouleau de stratification, vers l'emprise de ce rouleau, tout en maintenant le film à une température supérieure à la température de surface du rouleau de stratification, puis à souder l'un contre l'autre et par pression la feuille métallique et le film de résine thermoplastique afin de les stratifier.

Ce document montre parfaitement un mode de réalisation de l'assemblage par thermosoudage du film plastique et de la feuille métallique. II n'est cependant pas exempt de tout inconvénient.

En particulier, il prévoit un jeu de températures complexe pour le fonctionnement efficace du dispositif. En tout état de cause, il n'évite pas la formation de toute bulle, pli ou autre imperfection dans la bande de film plastique avant sa stratification.

En conséquence, il n'est pas rare d'obtenir des feuilles métalliques revêtues selon de tels procédés et présentant un état de surface médiocre ou pour le moins non homogène.

La présente invention permet de palier les inconvénients des techniques connues jusqu'à présent et présente pour ce faire un nouveau dispositif particulièrement avantageux.

L'un de ses premiers buts est d'éviter toute imperfection dans l'état de surface du film plastique avant l'étape de stratification. On obtient ainsi une tôle métallique revêtue de meilleure qualité.

Pour y parvenir, le dispositif a l'avantage de préparer le film plastique afin d'éviter toute irrégularité et de supprimer toute contrainte mécanique résiduelle au sein du film plastique.

Cette étape de préparation a pour effet d'étendre parfaitement le film sans lui imposer, au final, de contraintes.

D'autres buts et avantages apparaîtront au cours de la description qui suit qui présente un mode de réalisation préféré de l'invention mais qui n'en est cependant pas limitative.

La présente invention concerne un dispositif de préparation d'un film plastique en vue de sa stratification sur une feuille métallique, le film plastique et la feuille métallique avançant en continu jusqu'aux moyens de stratification, caractérisé par le fait qu'il comporte deux séries de rouleaux parallèles, rotatifs et d'une longueur équivalant sensiblement à la moitié de la largeur du film plastique, lesdites séries s'appliquant sur une face du film plastique de façon symétrique par rapport à son axe longitudinal médian.

Des variantes préférées de l'invention sont introduites ci-après :
- au moins une partie des rouleaux sont montés excentrés par rapport à leur axe de rotation.
- le sens de rotation des rouleaux est tel que leur point de contact avec le film plastique a une vitesse tangentielle s'opposant au sens d'avance du film.
- les séries de rouleaux forment les ailes d'un « V », l'extrémité des ailes étant orientée dans le sens de translation du film plastique.
- il comprend des moyens de réglage de l'angle du « V » formé par les séries de rouleaux.
- il comprend des moyens de contre-appui s'appliquant sur l'autre face du film plastique, en regard d'au moins une partie des rouleaux.
- les moyens de contre-appui sont constitués de bandes de feutre.
- les séries de rouleaux sont montées sur des moyens de suspension pour régler leur hauteur et l'effort appliqué au film plastique.
- le film plastique est stocké sur une bobine dans un boîtier thermostaté par un courant fluide chauffé et il comporte un canal d'injection de fluide chauffé depuis le boîtier jusqu'aux rouleaux.

L'invention sera mieux comprise aux vues des planches de dessins jointes qui présentent un mode préféré de réalisation indicatif de l'invention et qui n'en est pas limitatif.

La figure 1 est une vue générale schématique du dispositif selon l'invention en vue de côté.

La figure 2 est une vue partielle en coupe des axes de rotation des rouleaux mis en oeuvre selon l'invention dans un mode particulier de réalisation.

La figure 3 est une vue en coupe selon les lignes AA de la figure 1 permettant la visualisation de dessus des rouleaux.

De façon connue en soi, le dispositif s'inscrit dans une installation comprenant des moyens d'avance d'une feuille métallique 1 et des moyens d'avance d'un film plastique 2 jusqu'à des moyens de stratification comprenant généralement un cylindre 3 de stratification. Ce cylindre 3 réalise une pression du film plastique 2 sur l'une des faces de la feuille métallique 1 et, par application de température, réalise le soudage.

Le dispositif selon l'invention permet de préparer le film plastique 2 en vue de cette étape de stratification et se place pour ce faire en amont du cylindre de stratification 3.

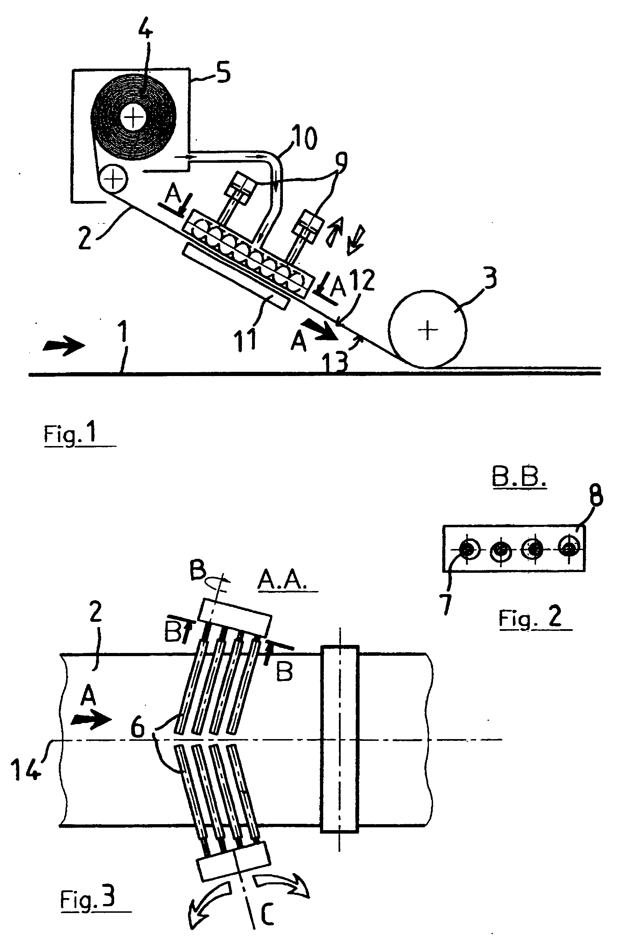

Dans le cas illustré en figure 1, le film plastique 2 est stocké sur une bobine 4 montée rotative au sein d'un boîtier de stockage 5. De façon préférée, cette zone de stockage est thermostatée afin de placer du film plastique 2 à bonne température en vue de l'opération de stratification.

En sortie du boîtier de stockage 5, le film plastique est conduit jusqu'à parvenir dans le dispositif de préparation objet de la présente invention.

A ce niveau, deux séries de rouleaux 6 sont formées.

Comme présenté en figure 3 en vue de dessus, deux séries de rouleaux sont constituées de part et d'autre du film plastique 2 dans le sens de sa largeur afin de recouvrir sensiblement chacune une moitié de sa largeur.

Toujours en référence à la figure 3, chaque série comprend une pluralité de rouleaux 6 qui sont parallèles entre eux et montés en rotation.

On a schématisé en figure 2 le support de motorisation 8 permettant la rotation de chacun des rouleaux 6. Tout mode de motorisation peut être utilisé et notamment des moteurs électriques indépendants dont l'axe de rotation est accouplé à un rouleau ou encore une motorisation commune avec des systèmes de transmission de puissance.

Selon l'invention, les rouleaux 6 sont disposés de telle façon qu'ils s'appliquent sur l'une des face 12 du film plastique 2.

Pour assurer une légère vibration du film plastique 2, les rouleaux 6 ou une partie d'entre eux sont montés de façon excentrique sur la sortie de la motorisation. De cette façon, ils réalisent un léger mouvement de montée et de descente au cours de la rotation permettant de s'appliquer variablement sur la face 12 du film plastique.

Comme le montre la figure 2, les axes 7 des rouleaux ont une position angulaire décalée par rapport à l'axe de motorisation de façon à ce qu'ils se situent dans des positions différentes un même instant de fonctionnement.

Pour assurer un travail efficace des rouleaux 6 lors de leur contact avec la face 12, on réalise préférentiellement leur rotation dans la sens inverse du sens l'avance A du film plastique 2.

De cette façon, le sens du vecteur vitesse tangentiel du point de contact du rouleau 6 avec le film plastique 2 est s'oppose à la translation A.

Comme le montre la figure 3, les deux séries de rouleaux 6 forment préférentiellement un « V », chaque série formant sensiblement l'une des ailes du « V ». Les extrémités des ailes sont orientées selon le sens de translation A du film plastique.

Un effet d'ouverture du film plastique 2 est ainsi produit. De façon préférée, il est possible de régler l'angle du « V » ainsi formé suivant un mouvement d'orientation repéré C en figure 3.

Pour augmenter l'efficacité des rouleaux 6 sur la face 12, le dispositif de préparation comprend en outre préférentiellement des moyens de contre-appui 11 placés de l'autre côté du film plastique 2 et situés sensiblement au regard des rouleaux 6.

De façon préférée, les moyens de contre-appui 11 sont une série de bandes de feutre d'orientation parallèle aux rouleaux 6 et s'appliquant ou affleurant sur la face 13 inférieure du film plastique 2.

Afin d'ajuster l'effort appliqué par les rouleaux sur la feuille de plastique 2, le dispositif comprendra préférentiellement des moyens de suspension 9 tels que représentés en figure 1. Tout moyen courant peut être utilisé et notamment un système de suspension par vérin hydraulique ou en encore par simples ressorts hélicoïdaux.

Le dispositif ici proposé sera préférentiellement thermostaté de façon à maintenir le film plastique 2 à une température permettant son assemblage efficace avec la feuille métallique 1, de façon classique.

De façon préférée, on profite d'un courant de fluide chauffé servant à thermostater le boîtier de stockage 5 pour thermostater le dispositif de préparation. Dans ce cadre, un canal 10 sera constitué pour relier le volume intérieur du boîtier 5 au dispositif de préparation.

Le fluide chauffé tel que de l'air chaud, pourra être conduit pour s'appliquer sur les rouleaux 6 par ce biais.

Tel que décrit, les rouleaux 6 du dispositif de préparation permettent d'appliquer un effort sensiblement de vibration et d'ouverture servant à détendre le film plastique 2. De cette façon, on supprime toute imperfection éventuelle du film plastique telle que des plis ou des reliefs à sa surface.

### REFERENCES

1. Feuille métallique
2. Film
3. Cylindre
4. Bobine
5. Boîtier de stockage
6. Rouleaux
7. Axe du rouleau
8. Support de motorisation
9. Moyens de suspension
10. Canal
11. Moyens de contre-appui
12. Face supérieure
13. Face inférieure
14. Axe longitudinal médian
A. Sens de translation
B. Sens de rotation
C. Mouvement d'orientation

## Revendications

1. Dispositif de préparation d'un film plastique (2) en vue de sa stratification sur une feuille métallique (1), le film plastique (2) et la feuille métallique (1) avançant en continu jusqu'au moyens de stratification, **caractérisé par le fait**
**qu'**il comporte deux séries de rouleaux (6) parallèles, rotatifs et d'une longueur équivalant sensiblement à la moitié de la largeur du film plastique (2), lesdites séries s'appliquant sur une face (12) du film plastique (2) de façon symétrique par rapport à son axe longitudinal médian (14).

2. Dispositif selon la revendication 1, **caractérisé par le fait**
**qu'**au moins une partie des rouleaux (6) sont montés excentrés par rapport à leur axe de rotation.

3. Dispositif selon la revendication 1 ou 2, **caractérisé par le fait**
**que** le sens de rotation des rouleaux (6) est tel que leur point de contact avec le film plastique (2) a une vitesse tangentielle s'opposant au sens d'avance (A) du film (2).

4. Dispositif selon l'une quelconque des revendications 1 à 3, **caractérisé par le fait**
**que** les séries de rouleaux (6) forment les ailes d'un « V », l'extrémité des ailes étant orientée dans le sens (A) d'avance du film plastique.

5. Dispositif selon la revendication 4, **caractérisé par le fait**
**qu'**il comprend des moyens de réglage de l'angle du « V » formé par les séries de rouleaux.

6. Dispositif selon l'une quelconque des revendications 1 à 5, **caractérisé par le fait**
**qu'**il comprend des moyens de contre-appui (11) s'appliquant sur l'autre face (13) du film plastique (2), en regard d'au moins une partie des rouleaux (6).

7. Dispositif selon la revendication 6, **caractérisée par le fait**
**que** les moyens de contre-appui (11) sont constitués de bandes de feutre.

8. Dispositif selon l'une quelconque des revendications 1 à 7, **caractérisé par le fait**
**que** les séries de rouleaux (6) sont montées sur des moyens de suspension (9) pour régler leur hauteur et l'effort appliqué au film plastique (2).

9. Dispositif selon l'une quelconque des revendications 1 à 8, **caractérisé par le fait**
**que** le film plastique (2) est stocké sur une bobine (4) dans un boîtier (5) thermostaté par un courant fluide chauffé et qu'il comporte un canal (10) d'injection de fluide chauffé depuis le boîtier (5) jusqu'aux rouleaux (6).

## Patentansprüche

1. Vorrichtung zur Vorbereitung einer Plastikfolie (2) zum Zweck der Beschichtung einer Metallfolie (1), bei der sich die Plastikfolie (2) und die Metallfolie (1) kontinuierlich bis zu den Beschichtungsmitteln fortbewegen, **dadurch gekennzeichnet,**
**daß** sie zwei Reihen parallel angeordneter, drehbarer Walzen (6) besitzt, deren Länge etwa der Hälfte der Plastikfolie (2) entspricht und bei der die Walzenreihen sich auf einer Seite (12) der Plastikfolie (2) symmetrisch zu deren mittlerer Längsachse (14) anlegen.

2. Vorrichtung gemäß Anspruch 1, **dadurch gekennzeichnet, daß** mindestens ein Teil der Walzen (6) in bezug auf ihre Drehachse exzentrisch gelagert sind.

3. Vorrichtung gemäß Anspruch 1 oder 2, **dadurch gekennzeichnet, daß** die Drehrichtung der Walzen (6) so gewählt ist, daß sie an ihrem Berührungspunkt mit dem Plastikfilm (2) eine Tangentialgeschwindigkeit haben, die sich der Fortbewegungsrichtung (A) des Plastikfilms (2) widersetzt.

4. Vorrichtung gemäß einem der Ansprüche 1 bis 3, **dadurch gekennzeichnet,**
**daß** die Reihen der Walzen (6) die Flügel eines "V" bilden, wobei die Enden der Flügel in die Fortbewegungsrichtung (A) der Plastikfolie zeigen.

5. Vorrichtung gemäß Anspruch 4, **dadurch gekennzeichnet, daß** sie Mittel zum Einstellen des Winkels besitzen, der von den V-förmig angeordneten Walzenreihen gebildet wird.

6. Vorrichtung gemäß einem der Ansprüche 1 bis 5, **dadurch gekennzeichnet,**
**daß** sie Andrückmittel (11) besitzt, die auf der anderen Seite (13) der Plastikfolie (2), gegenüber von mindestens einem Teil der Walzen (6) angeordnet sind.

7. Vorrichtung gemäß Anspruch 6, **dadurch gekennzeichnet, daß** die Andrückmittel (11) aus Filzbändern bestehen.

8. Vorrichtung gemäß einem der Ansprüche 1 bis 7, **dadurch gekennzeichnet,**
**daß** die Reihen von Walzen (6) an Aufhängungen (9) befestigt sind, um ihre Höhe und die auf die Plastikfolie (2) ausgeübte Kraft einzustellen.

9. Vorrichtung gemäß einem der Ansprüche 1 bis 8, **dadurch gekennzeichnet,**
**daß** die Plastikfolie (2) auf einer Spule (4) in einem Gehäuse (5) gelagert wird, dessen Temperatur mit einem beheizten Fluidstrom geregelt wird und das einen Kanal (10) besitzt, um das erwärmte Fluid vom Gehäuse (5) auf die Walzen (6) zu leiten.

## Claims

1. Device for the preparation of a plastic coating (2) with a view to its lamination on a sheet of metal (1), the plastic coating (2) and the sheet of metal (1) feeding continuously the lamination means, **characterized in that**
it consists of two series of parallel rotary rollers (6) of a length roughly equal to half the width of plastic coating (2), each aforementioned series bearing symmetrically on one side (12) of plastic coating (2) relative to its median longitudinal axis (14).

2. Device according to claim 1 **characterized in that**
at least one part of the rollers (6) are fitted eccentrically relative to their axis of rotation.

3. Device according to claim 1 **characterized in that**
the direction of rotation of rollers (6) is such that their point of contact with plastic coating (2) takes place at a tangential speed that opposes the direction of feed (A) of coating (2).

4. Device according to any of claims 1 to 3 **characterized in that**
the series of rollers (6) form the sides of a " V ", the end of the sides being oriented in the direction of feed (A) of the plastic coating.

5. Device according to claim 4 **characterized in that**
it includes means for adjusting the angle of the " V " formed by the serial of rollers.

6. Device according to any of claims 1 to 5 **characterized in that**
it includes backing means (11) bearing on the other side (13) of plastic coating (2), opposite at least one part of rollers (6).

7. Device according to claim 6 **characterized in that**
the backing means (11) consist of felt strips.

8. Device according to any of claims 1 to 7 **characterized in that**
the series of rollers (6) are fitted on suspension means (9) for adjusting their height and the force applied on the plastic coating (2).

9. Device according to any of claims 1 to 8 **characterized in that**
plastic coating (2) is stored on a coil (4) in an enclosure (5) thermostatically controlled by a flow of heated liquid and that it includes an injection line (10) from casing (5) to rollers (6).
